# EUROPÄISCHE PATENTSCHRIFT

(11) **EP 1 643 154 B1**
(45) Veröffentlichungstag und Bekanntmachung des Hinweises auf die Patenterteilung: **14.03.2007**
(21) Anmeldenummer: 05020318.1
(22) Anmeldetag: 17.09.2005
(51) Int. Cl.: F16F 1/373

(54) **Elastisches Motorlager zur Lagerung einer Brennkraftmaschine in einem Kraftfahrzeug**
Resilient engine mount for mounting an internal combustion engine in a vehicle
Support élastique pour supporter un moteur à combustion interne dans un véhicule

(30) Priorität: 29.09.2004 DE 102004047173
(43) Veröffentlichungstag der Anmeldung: 05.04.2006
(73) Patentinhaber: Jörn GmbH, 71336 Waiblingen (DE)
(72) Erfinder: Seck, Gerhard, 73630 Remshalden (DE); Beyler, Klaus, 77815 Bühl (DE); Zawadzki, Bernd, 71409 Schwaikheim (DE)
(74) Vertreter: Neubauer, Hans-Jürgen

(56) Entgegenhaltungen:
- EP-A- 0 058 911
- DE-A1- 19 506 808
- DE-U- 1 800 990
- GB-A- 1 386 433
- US-A- 4 258 820
- US-A- 4 858 880
- US-B1- 6 523 817

## Beschreibung

Die Erfindung betrifft ein elastisches Motorlager zur Lagerung einer Brennkraftmaschine in einem Kraftfahrzeug, sowie ein Verfahren zur Dimensionierung eines solchen Lagers.

Allgemein bestehen solche elastischen Motorlager aus einem Elastomer-Metall-Element, welches einerseits an einem Aufbauträger des Kraftfahrzeugs abgestützt und andererseits an eine Motorstütze der Brennkraftmaschine angeschlossen ist.

Ein bekanntes elastisches Motorlager (DE 23 60 857 C2) besteht aus einem inneren hochkant gestellten doppelkeilförmigen Metallteil, an dem eine Motorstütze der Brennkraftmaschine angeschlossen ist. An den vier Seitenflächen des Metallteils sind quaderförmige Gummikörper angehaftet, welche in einen diese umgebenden Metallrahmen unter Vorspannung eingepresst sind. Die Gummikörper werden bei vertikal sowohl nach unten als auch nach oben gerichteter Belastung auf Schub und Druck beansprucht. Je nach Neigungswinkel der Keile können dabei unterschiedliche Federkonstanten in vertikaler Richtung erzielt werden. Solche Motorlager sind relativ aufwendig und insbesondere für große Motoren in Nutzfahrzeugen vorgesehen.

Weiter ist ein gattungsgemäßes Motorlager bekannt (US 4,858,880 A) mit einem Elastomer-Metall-Element, welches einerseits an einem Aufbauträger des Kraftfahrzeuges abgestützt und andererseits an einer Motorstütze angeschlossen ist. Das Elastomer-Metall-Element ist mehrteilig ausgebildet und besteht aus einem zentralen, vertikal ausgerichteten, vorzugsweise metallischen Stützrohr mit wenigstens zwei darauf aufgesteckten und übereinander angeordneten Elastomer-Ringteilen. Das Stützrohr und ein unteres Elastomer-Ringteil als Trag-Ringteil sind jeweils mit unteren Stirnseiten an einem Aufbauträger, beispielsweise einem Längsträger abgestützt, wobei die Motorstütze am elastischen Trag-Ringteil beabstandet zu dessen unterer Stirnseite angeschlossen ist. Ein oberes Elastomer-Ringteil als Spann-Ringteil liegt von oben her auf der Motorstütze an. Auf dem Spann-Ringteil und auf der oberen Stirnseite des Stützrohrs liegt eine Druckscheibe an, die durch das Stützrohr mit einer zentralen Schraube am Aufbauträger angeschraubt ist. Die axialen Erstreckungen der sich axial abstützenden Elemente sind dabei so dimensioniert, dass im betriebsmäßig statischen Zustand bei statischer Motorlast und/oder bei einer Ausfederung nach oben das Spann-Ringteil unter Vorspannung und/oder als elastischer Anschlag an der Motorstütze anliegt. Das Trag-Ringteil weist einen oberen Zylinder-Teilbereich und einen unteren Teilbereich auf. Am Übergang vom Zylinder-Teilbereich zum unteren Teilbereich ist ein radial abstehender Tragflansch für die Motorstütze ausgebildet, wobei der untere Teilbereich einen größeren Durchmesser im Vergleich zum Zylinder-Teilbereich aufweist, so dass der Tragflansch zumindest teilweise vom Konus-Teilbereich unterstützt ist.

Ein solches bekanntes elastisches Motorlager ist einfach und kostengünstig aufgebaut und hat einen bevorzugten Einsatz in kleineren Nutzfahrzeugen. Insbesondere weist ein solches Motorlager auch gegen abhebende Kräfte eine Abstützung durch die Verwendung des durch die Druckscheibe nach oben abgestützten elastischen Spann-Ringteils auf. Ein relativ weich dimensioniertes unteres Elastomer-Ringteil als Trag-Ringteil mit relativ kleiner Federkonstante führt hier zu einer entsprechend weichen Abstützung der Brennkraftmaschine mit hohem Fahrkomfort. Eine solche, an sich angestrebte Auslegung ist jedoch nur begrenzt möglich und führt bei hohen Einfederkräften der Brennkraftmaschine, beispielsweise bei schnellen Änderungen in der Fahrdynamik und/oder schnellen Lastwechseln, zu einer hohen Belastung des relativ weichen Elastomermaterials mit der Gefahr einer geringen Lebensdauer des Motorlagers.

Aufgabe der Erfindung ist es daher ein gattungsgemäßes Motorlager so weiterubilden, dass bei einfachem Aufbau eine Verbesserung des Fahrkomforts bei hohen Standzeiten möglich ist und ein Verfahren zu dessen Dimensionierung bereit zu stellen.

Diese Aufgabe wird mit den Merkmalen des Anspruchs 1, bzw. mit den Merkmalen des Anspruchs 11 hinsichtlich des Verfahrens gelöst.

Erfindungsgemäß steht der Tragflansch radial am unteren Teilbereich vor, und radial außerhalb des unteren Teilbereichs ist unter dem Tragflansch ein Ringanschlag aus Elastomermaterial angeformt, dessen Unterkante bei statischer Motorlast entsprechend einem vorbestimmten Anschlagweg gegenüber der unteren Stirnseite des Trag-Ringteils nach oben versetzt liegt.

Mit einem solchen Aufbau kann das untere Trag-Ringteil für eine komfortable Abstützung bei üblichen Betriebsbedingungen relativ weich ausgelegt werden. Erst nach einem Einfederweg größer als der Anschlagweg bei härteren Betriebsbedingungen tritt der Ringanschlag in Funktion und führt insgesamt zu einem härteren Motorlager und zu einer Entlastung des Tragringteils. Die Schwingungs- und Geräuschdämpfung sind dann zwar nicht mehr optimal aber die Lagerung ist hochbelastbar und zerstörsicher. Durch die Ausbildung des Anschlags als Ringanschlag ist dessen Funktion auch bei kardanischen Einfedervorgängen gegeben. Die Anbringung des Ringanschlags am radial gegenüber dem unteren Teilbereich vorstehenden Tragflansch stellt ein einfache, funktionssichere und kostengünstige konstruktive Lösung dar.

Die Konusausbildung des unteren Teilbereichs nach Anspruch 2 ermöglicht eine weitere Anpassung des Anstiegs der vertikalen Einfeder-Federkonstante an konkrete Gegebenheiten.

In einer bevorzugten Ausgestaltung des Tragflansches nach Anspruch 3 ist dieser und/oder die Außenwand des Zylinder-Teilbereichs durch ein außen mit einem Gummifilm und/oder Gummistegen und/oder Gumminoppen überzogenes und mit dem Elastomermaterial verbundenes, vorzugsweise einvulkanisiertes Blechrohr mit stirnseitig abgebogenem Blechrohrflansch gebildet. Es kann dabei in an sich bekannter Weise ein gelochtes Blech verwendet werden, so dass Elastomermaterial durch die Blechlochung hindurch unmittelbar. Verbindung mit dem äußeren Gummifilm und/oder den Gummistegen oder den Gumminoppen hat. Die Motorstütze ist mit einer entsprechend formangepassten Ausnehmung über den Zylinder-Teilbereich gesteckt und liegt auf dem Tragflansch im Bereich um diese Ausnehmung auf. Durch die an den Zylinder-Teilbereich formangepasste Ausnehmung wird die Motorstütze am Zylinder-Teilbereich in Horizontalrichtung festgelegt. Toleranzen bei der Herstellung solcher Ausnehmungen werden in den auf der Außenseite des Zylinder-Teilbereichs angebrachten Gummiauflagen, insbesondere in Gummistegen und/oder Gumminoppen aufgenommen, welche sich bei der Montage des Lagers an den Ausnehmungsdurchmesser anpassen und einen festen Sitz der Motorstütze gewährleisten.

Um die Auflageeigenschaften des Trag-Ringteils zu verbessern wird mit Anspruch 4 vorgeschlagen, an der unteren Stirnseite eine mit einem Gummifilm und/oder Gummistegen überzogene und mit dem Elastomermaterial des Trag-Ringteils verbundene, vorzugsweise einvulkanisierte Blechringscheibe vorzusehen.

Gemäß Anspruch 5 ist zur Abstützung abhebender Kräfte das obere Spann-Ringteil als Elastomerscheibe ausgebildet, deren radialer Außenrandbereich den Zylinder-Teilbereich des Trag-Ringteils radial überragt. In diesem Außenrandbereich ist ein nach unten zur Motorstütze hin gerichteter Druckring aus Elastomermaterial angeformt. Je nach Auslegung und Dimensionierung kann dieser Druckring im montierten Zustand bereits bei statischer Motorlast oder erst bei einer Ausfederung als dann wirkender Anschlag an der Motorstütze anliegen. Zweckmäßig weist der Druckring nach Anspruch 6 radial außen eine Zylinderform und radial innen eine sich nach unten verjüngende Konusform auf. Dadurch steigt bei zunehmendem Ausfederweg die Federkonstante stark an, wobei auch starke Ausfederbelastungen gut elastisch abgestützt werden.

Für eine Abdichtung des Zwischenraums zwischen dem Vorspann-Ringteil und der Motorstütze und gegen das Eindringen von Schmutz wird mit Anspruch 7 vorgeschlagen, dass gegenüber dem Druckring nach radial außen versetzt an der Elastomerscheibe des Vorspann-Ringteils eine umlaufende Dichtlippe angeformt ist. Diese Dichtlippe überragt den Druckring im Herstellzustand nach unten und liegt im Montagezustand unter Verformung und Vorspannung bei allen Ein- und Ausfederzuständen dicht an der Motorstütze von oben her an.

Nach Anspruch 8 weist die Dichtlippe einen gegenüber dem anschließenden Bereich formstabileren Randbereich als umlaufenden Wulst auf. Dadurch verformt sich bei der axialen Vorspannung und bei einer Ausfederung die Dichtlippe definiert nach außen. Wechselweise Verformungen nach innen und außen mit undefinierten Spannungszuständen, die zu Vorschädigungen neigen, werden vermieden.

Vorteilhaft ist nach Anspruch 9 am oberen Außenrand des Spann-Ringteils ein umlaufender Dichtwulst zur Druckscheibe hin eingeformt.

An der Elastomerscheibe des Vorspann-Ringteils kann nach Anspruch 10 im radial inneren Bereich über dem Zylinder-Teilbereich des Trag-Ringteils, vorzugsweise unmittelbar um das Stützrohr ein nach unten gerichteter elastischer Abstützring angeformt sein. Je nach verwendeter Stützrohrlänge liegt dann dieser Abstützring unter Vorspannung am Zylinder-Teilbereich an und trägt zur Erhöhung der vertikalen Federkonstante des Lagers bei oder er ist davon beabstandet und hat hinsichtlich der vertikalen Federkonstante keine Funktion. Dieser elastische Abstützring ist somit ein Merkmal, welches in Verbindung mit einer ausgewählten, vorbestimmten Stützrohrlänge zur Einstellung und Dimensionierung, insbesondere der vertikalen Federkonstante, einsetzbar ist.

Nach Anspruch 11 erfolgt eine Grunddimensionierung für die axiale und radiale Federkonstante eines Motorlagers unter Berücksichtigung der jeweiligen Motorlast, der Motorstützenausbildung und des Einbauraums durch eine Anpassung der Größen- und Winkelverhältnisse an den Struktur-Teilbereichen des Trag-Ringteils, des Spann-Ringteils und des Stützrohrs sowie durch die Wahl des Elastomermaterials. Eine Feinanpassung und -abstimmung der vertikalen und horizontalen Federkonstanten auf konkrete Motorlagerverhältnisse kann hier vorteilhaft mit nur sehr geringem Aufwand durch unterschiedliche Stützrohre mit unterschiedlichen Stützrohrlängen und/oder Stützrohraußendurchmessern erfolgen. Eine Variation dieser Stützrohre ist einfach möglich, wobei die aufwendiger herzustellenden Trag-Ringteile und Spann-Ringteile als Vulkanisierteile und Gleichteile jeweils mit gleichen Dimensionen und gleichen Gummihärten verwendet werden können. Längenänderungen der Stützrohre wirken sich dabei überwiegend in der vertikalen Federkonstante des Lagers aus, Durchmesseränderungen dagegen überwiegend in der horizontalen Federkonstante. Vorteilhaft kann dabei ein Motorlager an den einzelnen Lagerpunkt einer mehrfach gelagerten Brennkraftmaschine angepasst werden, d. h., dass z. B. bei vier Motorlagerpunkten jeweils Motorlager mit unterschiedlichen Stützrohrdimensionen bei gleichen Vulkanisierteilen verwendet werden. Damit kann insbesondere bei einem Nutzfahrzeug erreicht werden, dass Eigenfrequenzen des Motorlagersystems so eingestellt werden, dass es zu keinen Überlagerungen mit den Eigenfrequenzen des Fahrerhauses und einer Kühlanlage kommt, wobei Resonanzen vermieden und eine Geräuschentwicklung im Fahrerhaus reduziert wird.

Bevorzugt sollen nach Anspruch 12 die Konuswinkel des Konus-Teilbereichs des Trag-Ringteils im Herstellzustand in einem Bereich von 25° bis 30° liegen. Es hat sich gezeigt, dass dann die vorstehenden Anpassungen und Abstimmungen mittels einer Variation der Stützrohre weitgehend unabhängig vom verwendeten Elastomermaterial sind, so dass zusätzliche Materialänderungen für solche Abstimmungen innerhalb relativ großer Grenzen nicht erforderlich sind und vorteilhaft Vulkanisierteile als Gleichteile eingesetzt werden können.

Mit Anspruch 13 wird der Einsatz mehrerer durch die Variation von Stützrohren unterschiedlich ausgelegter Motorlager zur Lagerung einer Brennkraftmaschine beansprucht.

Anhand einer Zeichnung wird die Erfindung näher erläutert.

Es zeigen:
- Fig. 1: einen Längsschnitt durch ein fertig montiertes elastisches Motorlager im statisch belasteten Zustand,
- Fig. 2: einen Längsschnitt durch ein elastisches Motorlager nach Fig. 1 mit zusammengesteckten Einzelteilen, und
- Fig. 3: eine Seitenansicht auf ein unteres Elastomer-Ringteil des elastischen Motorlagers.

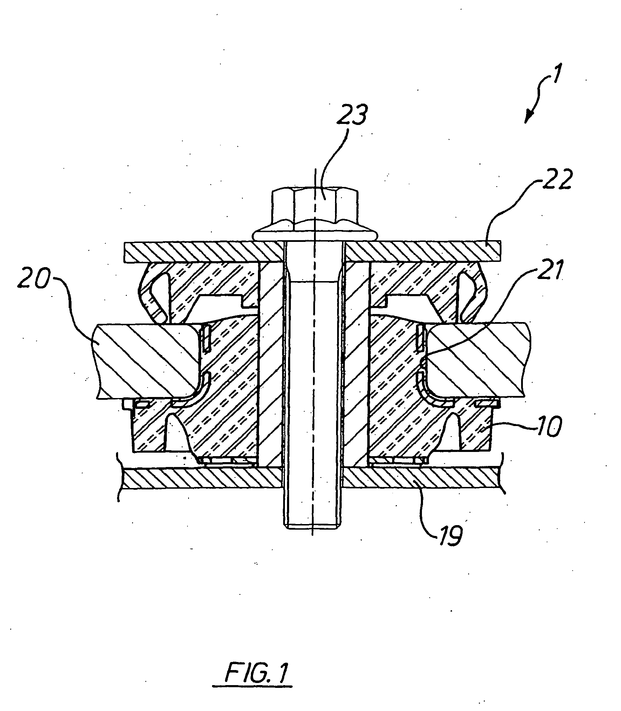

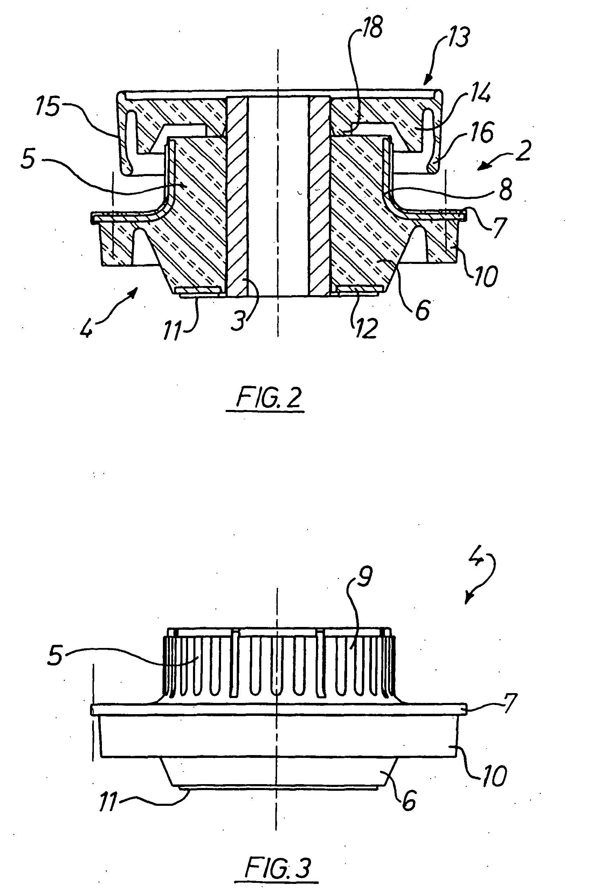

In Fig. 1 ist ein Längsschnitt durch ein fertig montiertes elastisches Motorlager 1 mit statischer Belastung dargestellt, dessen Einzelteile und Zusammenbau anhand des Längsschnitts nach Fig. 2 erläutert werden:

Das elastische Motorlager 1 umfasst ein Elastomer-Metall-Element 2, welches mehrteilig ausgebildet ist und aus einem zentralen vertikalen metallischen und stabilen Stützrohr 3 mit zwei darauf aufgesteckten und übereinander angeordneten Elastomer-Ringteilen besteht. Das Trag-Ringteil 4 weist, wie auch aus Fig. 3 ersichtlich einen oberen Zylinder-Teilbereich 5 und einen unteren sich im Herstellzustand nach unten verjüngenden Konus-Teilbereich 6 auf, mit einem Konuswinkel von 25° bis 30°. Am Übergang vom Zylinder-Teilbereich 5 zum Konus-Teilbereich 6 ist ein radial abstehender Tragflansch 7 ausgebildet, welcher teilweise vom Konus-Teilbereich 6 unterstützt ist. Der Tragflansch 7 und die Außenwand des Zylinder-Teilbereichs 5 sind durch ein einvulkanisiertes Blechrohr 8 gebildet, welches mit einem Gummifilm überzogen ist und axial verlaufende abstehende Gummistege 9 trägt. Das Blechrohr weist zur Ausbildung des Tragflansches 7 einen unteren stirnseitig abgebogenen Blechrohrflansch auf.

Radial außerhalb des Konus-Teilbereichs 6 ist unter dem Tragflansch 7 ein Ringanschlag 10 aus Elastomermaterial angeformt, dessen Unterkante gegenüber der unteren Stirnseite 11 des Trag-Ringteils 4 nach oben versetzt liegt. An dieser unteren Stirnseite 11 ist eine mit einem Gummifilm überzogene Blechringscheibe 12 einvulkanisiert.

Ein oberes Elastomer-Ringteil ist als Spann-Ringteil 13 in der Art einer Elastomerscheibe ausgebildet. Deren radialer Außenrandbereich überragt den Zylinder-Teilbereich 5 und dort ist ein nach unten gerichteter Druckring 14 aus Elastomermaterial angeformt. Der Druckring 14 weist radial außen eine Zylinderform und radial innen eine sich nach unten verjüngende Konusform auf.

Zudem ist gegenüber dem Druckring 14 nach radial außen versetzt am Spann-Ringteil 13 eine umlaufende Dichtlippe 15 angeformt, die den Druckring 14 nach unten überragt. Diese Dichtlippe 15 weist einen gegenüber dem anschließenden Bereich formstabileren Randbereich als umlaufenden Wulst 16 auf. Zudem ist auch am oberen Außenrand des Spann-Ringteils 13 ein umlaufender kleiner Dichtwulst 17 angeformt.

Weiter ist am Spann-Ringteil 13 im radial inneren Bereich über dem Zylinder-Teilbereich 5 des Trag-Ringteils 4 um das Stützrohr 3 herum ein nach unten gerichteter elastischer Abstützring 18 angeformt.

Im fertig montierten Zustand gemäß Fig. 1 sind das Stützrohr 3 und das Trag-Ringteil 4 mit ihren unteren Stirnseiten auf einem Aufbauträger 19, beispielsweise einem Längsträger des Fahrzeugs abgestützt. Eine teilweise dargestellte Motorstütze 20 ist mit einer an den Zylinder-Teilbereich 5 des Trag-Ringteils 4 formangepassten Ausnehmung 21 versehen und auf den Zylinder-Teilbereich 5 fest aufgesteckt, wobei die Gummistege 9 verformt werden und einen festen Halt der Motorstütze 20 auch bei unterschiedlichen Toleranzen der Ausnehmung 21 gewährleisten. Dabei liegt die Motorstütze 20 auf dem Tragflansch 7 im Bereich um die Ausnehmung 21 auf. Durch die statische Motorlast wölbt sich der untere Konus-Teilbereich 6 bei Verringerung seiner Höhe aus, wobei die Unterkante des Ringanschlags 10 entsprechend einem vorbestimmten Anschlagweg noch gegenüber dem Aufbauträger 19 nach oben versetzt liegt.

Auf dem Spann-Ringteil 13 und auf der oberen Stirnseite des Stützrohrs 3 liegt eine Druckscheibe 22. Durch diese hindurch und durch das Stützrohr 3 ist die Druckscheibe 22 mit einer zentralen Schraube 23 am Aufbauträger 19 angeschraubt. Die axiale Erstreckung des Stützrohrs 3 des Trag-Ringteils 4 und des Spann-Ringteils 13 sind dabei so dimensioniert, dass bei statischer Motorlast das Spann-Ringteil 13 unter Vorspannung von oben her an der Motorstütze 20 anliegt. Dabei ist die umlaufende Dichtlippe 15 nach außen ausgewölbt und liegt mit ihrem Wulst 16 bei allen betriebsmäßigen Ein- und Ausfederzuständen zur Abdichtung an der Motorstütze 20 an.

Je nach Auslegung des Lagers liegt entweder bereits bei statischer Motorlast der Druckring 14 an der Motorstütze 20 an oder kommt erst bei einer Ausfederung nach oben als elastischer Anschlag an der Motorstütze 20 zur Anlage. Wenn der Druckring 14 als elastischer Anschlag wirkt, steigt die Federkonstante durch die Konusform bei zunehmender Verformung des Druckrings 14 stark an. Je nach Lagerdimensionierung liegt der elastische Abstützring 18 bei statischer Motorlast zur Erhöhung der vertikalen Federkonstante an der Oberseite des Zylinder-Teilbereichs 5 an oder ist davon beabstandet.

Diese vorstehenden Lagerauslegungen sind durch die Wahl unterschiedlicher Stützrohrlängen einfach ausführbar. Eine Variation der horizontalen Federkonstanten ist durch unterschiedliche Stützrohrdurchmesser möglich, wobei damit das Trag-Ringteil und/oder das Spann-Ringteil im aufgesteckten Zustand mehr oder weniger in Radialrichtung vorgespannt sind.

## Patentansprüche

1. Elastisches Motorlager zur Lagerung einer Brennkraftmaschine in einem Kraftfahrzeug
mit einem Elastomer-Metall-Element (2), welches einerseits an einem Aufbauträger des Kraftfahrzeuges (19) abstützbar ist und andererseits an eine Motorstütze (20) der Brennkraftmaschine anschließbar ist, wobei
das Elastomer-Metall-Element (2) mehrteilig ausgebildet ist und aus einem zentralen, vertikal ausgerichteten, vorzugsweise metallischen Stützrohr (3) mit wenigstens zwei darauf aufgesteckten und übereinander angeordneten Elastomer-Ringteilen besteht,
das Stützrohr (3) und ein unteres Elastomer-Ringteil als Trag-Ringteil. (4) jeweils mit unteren Stirnseiten am Aufbauträger (19) abstützbar sind, wobei die Motorstütze (20) am Trag-Ringteil (4) beabstandet zu dessen unterer Stirnseite (11) anschließbar ist,
ein oberes Elastomer-Ringteil als Spann-Ringteil (13) von oben her auf der Motorstütze (20) anlegbar ist,
auf dem Spann-Ringteil (13) und auf der oberen Stirnseite des Stützrohrs (3) eine Druckscheibe (22) anliegt, durch die und durch das Stützrohr (3), dieses mit einer zentralen Schraube (23) am Aufbauträger (19) anschraubbar ist, wobei die axialen Erstreckungen der sich axial abstützenden Elemente so dimensioniert sind, dass im betriebsmäßig stati-schen Zustand bei statischer Motorlast und/oder bei Ausfederungen nach oben das Spann-Ringteil (13) unter Vorspannung und/oder als elastischer Anschlag an der Motorstütze (20) anlegbar ist,
das Trag-Ringteil (4) einen oberen Zylinder-Teilbereich (5) und einen unteren Teilbereich (6) aufweist, und
am Übergang vom Zylinder-Teilbereich (5) zum unteren Teilbereich (6) ein radial abstehender Tragflansch (7) für die Motorstütze (20) ausgebildet ist, wobei der untere Teilbereich (6) einen größeren Durchmesser im Vergleich zum Zylinder-Teilbereich (5) aufweist, so dass der Tragflansch (7) zumindest teilweise vom unteren Teilbereich (6) unterstützt ist,
**dadurch gekennzeichnet,**
**dass** der Tragflansch (7) radial am unteren Teilbereich (6) vorsteht, und
radial außerhalb des unteren Teilbereichs (6) unter dem Tragflansch (7) ein Ringanschlag (10) aus Elastomermaterial angeformt ist, dessen Unterkante bei statischer Motorlast entsprechend einem vorbestimmten Anschlagweg gegenüber der unteren Stirnseite (11) des Trag-Ringteils (4) nach oben versetzt liegt.

2. Elastisches Motorlager nach Anspruch 1, **dadurch gekennzeichnet, dass** sich der untere Teilbereich im Herstellzustand als Konus-Teilbereich (6) nach unten verjüngt und der Tragflansch (7) vom oberen Teil des Konus-Teilbereichs (6) teilweise unterstützt ist.

3. Elastisches Motorlager nach Anspruch 1 oder Anspruch 2, **dadurch gekennzeichnet,**
**dass** der Tragflansch (7) und/oder die Außenwand des Zylinder-Teilbereichs (5) durch ein außen mit einem Gummifilm und/oder Gummistegen und/oder Gumminoppen überzogenes und mit dem Elastomermaterial verbundenes, vorzugsweise einvulkanisiertes Blechrohr (8) mit stirnseitig abgebogenem Blechrohrflansch gebildet sind, und
**dass** die Motorstütze (20) mit einer entsprechend formangepassten Ausnehmung (21) über den Zylinder-Teilbereich (5) Steckbar ist, und die Motorstütze (20) auf dem Tragflansch(7) im Bereich um die Ausnehmung (21) auflegbar ist.

4. Elastisches Motorlager nach einem der Ansprüche 1 bis 3, **dadurch gekennzeichnet, dass** die untere Stirnseite (11) des Trag-Ringteils (4) durch eine mit einem Gummifilm und/oder Gummistegen überzogene und mit dem Elastomermaterial des Trag-Ringteils verbundene, vorzugsweise einvulkanisierte Blechringscheibe (12) gebildet ist.

5. Elastisches Motorlager nach einem der Ansprüche 1 bis 4, **dadurch gekennzeichnet, dass** das obere Spann-Ringteil (13) als Elastomerscheibe ausgebildet ist, deren radialer Außenrandbereich den Zylinder-Teilbereich (5) des Trag-Ringteils (4) radial überragt und in diesem Außenrandbereich ein nach unten zur Motorstütze (20) hin gerichteter Druckring (14) aus Elastomermaterial angeformt ist, welcher im montierten Zustand bei statischer Motorlast und/oder wenigstens bei einer Ausfederung nach oben unter Vorspannung und/oder als Anschlag an der Motorstütze (20) anlegbar ist.

6. Elastisches Motorlager nach Anspruch 5, **dadurch gekennzeichnet, dass** der Druckring (14) radial außen eine Zylinderform und radial innen eine sich nach unten verjüngende Konusform aufweist.

7. Elastisches Motorlager nach Anspruch 5 oder 6, **dadurch gekennzeichnet, dass** gegenüber dem Druckring (14) nach radial außen versetzt an der Elastomerscheibe des Spann-Ringteils (13) eine umlaufende Dichtlippe (15) angeformt ist, die den Druckring (14) im Herstellzustand nach unten überragt und im Montagezustand unter Verformung an der Motorstütze (20) dicht bei allen Ein- und Ausfederzuständen anlegbar ist.

8. Elastisches Motorlager nach Anspruch 7, **dadurch gekennzeichnet, dass** die Dichtlippe (15) einen gegenüber dem anschließenden Bereich formstabileren Randbereich als umlaufenden Wulst (16) aufweist.

9. Elastisches Motorlager nach einem der Ansprüche 5 bis 8, **dadurch gekennzeichnet, dass** am oberen Außenrand des Spann-Ringteils (13) ein umlaufender kleiner Dichtwulst (17) zur Druckscheibe (22) hin angeformt ist.

10. Elastisches Motorlager nach einem der Ansprüche 5 bis 9, **dadurch gekennzeichnet, dass** an der Elastomerscheibe des Spann-Ringteils (13) im radial inneren Bereich über dem Zylinder-Teilbereich (5) des Trag-Ringteils (4), vorzugsweise unmittelbar um das Stützrohr (3) ein nach unten gerichteter elastischer Abstützring (18) angeformt ist, der je nach verwendeter Stützrohrlänge im montierten Zustand unter Vorspannung von oben her am Zylinder-Teilbereich (5) anliegt oder beabstandet davon ist.

11. Verfahren zur Dimensionierung eines elastischen Motorlagers nach einem der Ansprüche 1 bis 10, **dadurch gekennzeichnet, dass** eine Grunddimensionierung für die axiale und radiale Federkonstante eines Motorlagers (1) unter Berücksichtigung der Motorlast, der Motorstützenausbildung und des Einbauraums durch eine Anpassung der Größen- und Winkelverhältnisse an den Strukturteilbereichen des Trag-Ringteils (5), des Spann-Ringteils (13) und des Stützrohrs (3) sowie durch die Wahl des Elastomermaterials erfolgt, und
dass eine Feinanpassung und Abstimmung der Federkonstanten auf konkrete Motorlagerverhältnisse, insbesondere an einzelnen Lagerpunkten eines Motors, bei Verwendung gleicher Trag-Ringteile (4) und Spann-Ringteile (13) und durch unterschiedliche Stützrohre (3) aus einem zur Verfügung stehenden Stützrohrsatz mit unterschiedlichen Stützrohrlängen und/oder Stützrohraussendruchmessern erfolgt.

12. Verfahren zur Dimensionierung eines elastischens Motorlagers nach Anspruch 11, **dadurch gekennzeichnet, dass** der Konuswinkel des Konus-Teilbereichs (6) des Trag-Ringteils (4) im Herstellzustand in einem Bereich von 25° - 30° liegt.

13. Verfahren zur Dimensionierung eines elastischen Motorlagers nach Anspruch 11 oder Anspruch 12, **dadurch gekennzeichnet, dass** wenigstens zwei Motorlager (1) zur Lagerung einer Brennkraftmaschine verwendet sind, die an die jeweiligen Verhältnisse an den zugeordneten Lagerstellen durch den Einsatz jeweils unterschiedlicher Stützrohre (3) bei jeweils gleichen Trag-Ringteilen (4) und gleichen Spann-Ringteilen (13) angepasst sind.

## Claims

1. Elastic engine mount for the mounting of an internal combustion engine in a motor vehicle with an elastomer-metal-element (2) which on one side is supportable on a body member of the motor vehicle (19), and on the other side is connectable to an engine support (20) of the internal combustion engine, wherein the elastomer-metal-element (2) is formed in a multipart manner and comprises a central, vertically orientated, preferably metal support tube (3) with at least two elastomer ring sections fitted upon it and installed one above the other, the support tube (3) and a lower elastomer ring section as a supporting ring section (4) are supportable in each case by lower end faces on the body member (19), wherein the engine support (20) is connectable to the supporting ring section (4), spatially distanced from its lower end face (11),
an upper elastomer ring section as a tensioning ring section (13) is bearable from the top on the engine support (20),
a pressure plate (22) bears upon the tensioning ring section (13) and on the upper end face of the support tube (3), by which and by the support tube (3) this is screwable by a central screw (23) on the body member (19), wherein the axial extents of the axially supporting elements are dimensioned so that in the operationally-wise static state, with static engine load and/or with deflections upwards, the tensioning ring section (13) is bearable on the engine support (20) under pretension and/or as an elastic stop,
the supporting ring section (4) has an upper cylinder sub-section (5) and a lower sub-section (6), and
a radially projecting support flange (7) for the engine support (20) is formed at the transition from the cylinder sub-section (5) to the lower sub-section (6), wherein the lower sub-section (6) has a larger diameter in comparison to the cylinder sub-section (5) so that the support flange (7) is supported at least partially by the lower sub-section (6),
**characterized in that**,
the support flange (7) projects radially on the lower sub-section (6), and
an annular stop (10) of elastomer material is formed below the support flange (7) radially outside the lower sub-section (6), the lower edge of which with static engine load lies displaced upwards, corresponding to a predetermined stop travel in relation to the lower end face (11) of the supporting ring section (4).

2. Elastic engine mount according to Claim 1, **characterized in that**, the lower sub-section in the manufactured state tapers downwards as a cone sub-section (6) and the support flange (7) is partially supported by the upper part of the cone sub-section (6).

3. Elastic engine mount according to Claim 1 or Claim 2, **characterized in that**, the support flange (7) and/or the outer wall of the cylinder sub-section (5) are formed by a metal tube (8), covered on the outside with a rubber film and/or rubber ribs and/or rubber knobs and connected to the elastomer material, preferably by vulcanizing, with a metal tube flange bent down on the end face, and
that the engine support (20) is fittable over the cylinder sub-section (5) with a correspondingly shape-conforming clearance (21), and the engine support (20) is bearable upon the support flange (7) in the region around the clearance (21).

4. Elastic engine mount according to one of Claims 1 to 3, **characterized in that**, the lower end face (11) of the supporting ring section (4) is formed by a metal annular plate (12), covered by a rubber film and/or rubber ribs and connected to the elastomer material of the supporting ring section, preferably by vulcanizing.

5. Elastic engine mount according to one of Claims 1 to 4, **characterized in that**, the upper tensioning ring section (13) is formed as an elastomer disc, the radial outer edge region of which radially protrudes over the cylinder sub-section (5) of the supporting ring section (4), and a compression ring (14) of elastomer material, directed downwards towards the engine support (20), is formed in this outer edge region, which in the fitted state with static engine load and/or at least with a deflection upwards, is bearable upon the engine support (20) under pretension and/or as a stop.

6. Elastic engine mount according to Claim 5, **characterized in that**, the compression ring (14) has a cylinder form radially on the outside and a downwards tapering conical form radially on the inside.

7. Elastic engine mount according to Claim 5 or 6, **characterized in that**, an encompassing sealing lip (15), displaced radially outwards in relation to the compression ring (14), is formed on the elastomer disc of the tensioning ring section (13), which in the manufactured state projects downwards over the compression ring (14) and in the fitted state is bearable upon the engine support (20) tightly by deformation during all compressions and deflections.

8. Elastic engine mount according to Claim 7, **characterized in that**, the sealing lip (15) has an edge region as an encompassing bead (16) which is more geometrically stable in relation to the adjacent region.

9. Elastic engine mount according to one of Claims 5 to 8, **characterized in that**, an encompassing smaller sealing bead (17) for the pressure plate (22) is formed on the upper outer edge of the tensioning ring section (13).

10. Elastic engine mount according to one of Claims 5 to 9, **characterized in that**, a downwards orientated elastic support ring (18) is formed on the elastomer disc of the tensioning ring section (13) in the radially inner region above the cylinder sub-section (5) of the supporting ring section (4), preferably directly around the support tube (3), which according to the applied support tube length bears from the top in the fitted state under pretension upon the cylinder sub-section (5) or is spatially distanced from it.

11. Method for the dimensioning of an elastic engine mount according to one of Claims 1 to 10, **characterized in that**, a basic dimensioning for the axial and radial spring constant of an engine mount (1), in consideration of the engine load, the engine support construction and the installation space, is effected by the adaptation of the size- and angle relationships to the structural sub-sections of the supporting ring section (5), the tensioning ring section (13) and the support tube (3) and also by the selection of the elastomer material, and
**in that** a fine adjustment and matching of the spring constants to concrete engine mount relationships, especially on individual bearing points of an engine, is effected by use of the same supporting ring sections (4) and tensioning ring sections (13) and by different support tubes (3) from an available support tube set with different support tube lengths and/or support tube outside diameters.

12. Method for the dimensioning of an elastic engine mount according to Claim 11, **characterized in that**, the cone angle of the cone sub-section (6) of the supporting ring section (4) lies in a range of 25°-30° in the manufactured state.

13. Method for the dimensioning of an elastic engine mount according to Claim 11 or Claim 12, **characterized in that**, at least two engine mounts (1) are used for the mounting of an internal combustion engine, which are adapted to the respective relationships at the associated bearing points by the use of different support tubes (3) in each case, with the same supporting ring sections (4) and the same tensioning ring sections (13) in each case.

## Revendications

1. Support de moteur élastique pour supporter un moteur à combustion interne dans un véhicule automobile
avec un élément en métal - élastomère (2), qui peut d'une part être en appui sur un support de carrosserie du véhicule automobile (19), et d'autre part est raccordable à un support de moteur (20) du moteur à combustion interne, à l'occasion de quoi
l'élément en métal - élastomère (2) est formé par plusieurs pièces et est constitué d'un tube support (3) central, orienté verticalement, de préférence métallique avec au moins deux pièces annulaires en élastomère fixées dessus et disposées les unes au-dessus des autres,
le tube-support (3) et une pièce annulaire inférieure en élastomère en tant que pièce annulaire de support (4) peuvent être appuyées respectivement avec les côtés frontaux inférieurs sur le support de carrosserie (19), le support de moteur (20) étant raccordable à la pièce annulaire de support (4), à distance de son côté frontal inférieur (11),
une pièce annulaire supérieure en élastomère en tant que pièce annulaire de serrage (13) pouvant être posée par le haut sur le support de moteur (20),
une rondelle de pression (22) reposant sur la pièce annulaire de serrage (13) et sur le côté frontal supérieur du tube support (3), par l'intermédiaire de laquelle et du tube support (3), ce dernier peut être vissé avec une vis centrale (23) sur le support de carrosserie (19), les prolongations axiales des éléments s'appuyant axialement étant dimensionnées de sorte que, dans un état statique avec un fonctionnement normal, pour une charge de moteur statique et / ou avec des rebonds vers le haut, la pièce annulaire de serrage (13) peut être placée sous précontrainte et /ou en tant que butée élastique sur le support de moteur (20),
la pièce annulaire de support (4) présentant une zone partielle supérieure cylindrique (5) et une zone partielle inférieure (6), et
à la transition de la zone partielle cylindrique (5) vers la zone partielle inférieure (6), il est formé une bride d'appui éloignée radialement (7) pour le support de moteur (20), à l'occasion de quoi la zone partielle inférieure (6) présente un plus grand diamètre en comparaison avec la zone partielle cylindrique (5), de sorte que la bride d'appui (7) est soutenue au moins partiellement par la zone partielle inférieure (6),
**caractérisé en ce que**
la bride d'appui (7) est en saillie radiale sur la zone partielle inférieure (6), et
une butée annulaire (10) est formée à partir d'une matière élastomère, radialement à l'extérieur de la zone partielle inférieure (6) sous la bride d'appui (7), butée dont le bord inférieur se situe décalé vers le haut, pour une charge de moteur statique conformément à une course de butée prédéfinie, par rapport au côté frontal inférieur (11) de la pièce annulaire de support (4).

2. Support de moteur élastique conformément à la revendication 1, **caractérisé en ce que** la zone partielle inférieure à l'état de fabrication est réduite vers le bas sous forme de zone partielle conique (6) et **en ce que** la bride d'appui (7) est partiellement soutenue par la partie supérieure de la zone partielle conique (6).

3. Support de moteur élastique conformément à la revendication 1 ou 2, **caractérisé en ce que** la bride d'appui (7) et / ou la paroi extérieure de la zone partielle cylindrique (5) sont formées par un tuyau en tôle (8), de préférence vulcanisé, revêtu à l'extérieur d'un film en caoutchouc et / ou de nervures en caoutchouc et / ou de noppes en caoutchouc et relié à une matière élastomère, avec une bride de tuyau en tôle courbée sur le côté frontal, et
**en ce que** le support de moteur (20) est enfichable avec un creux (21), dont la forme est adaptée de manière appropriée via la zone partielle cylindrique (5), et le support de moteur (20) peut être posé sur la bride d'appui (7) dans la zone autour du creux (21).

4. Support de moteur élastique conformément à l'une des revendications 1 à 3, **caractérisé en ce que** le côté frontal inférieur (11) de la pièce annulaire de support (4) est formé par un disque annulaire en tôle (12), de préférence vulcanisé, revêtu d'un film en caoutchouc et / ou de nervures en caoutchouc et relié à la matière élastomère de la partie annulaire de support.

5. Support de moteur élastique conformément à l'une des revendications 1 à 4, **caractérisé en ce que** la pièce annulaire de serrage supérieure (13) est réalisée sous forme d'un disque élastomère, dont la zone de bord extérieure radiale surplombe radialement la zone partielle cylindrique (5) de la pièce annulaire de support (4) et une bague de butée (14) orientée vers le bas par rapport au support de moteur (20) est formée dans cette zone de bord extérieure à partir d'une matière élastomère, bague qui, lorsqu'elle est montée, peut être montée, avec une charge de moteur statique et / ou au moins un rebond vers le haut, sous précontrainte et / ou en tant que butée, sur le support de moteur (20).

6. Support de moteur élastique conformément à la revendication 5, **caractérisé en ce que** la bague de butée (14) présente radialement à l'extérieur une forme cylindrique et radialement à l'intérieur une forme conique se réduisant vers le bas.

7. Support de moteur élastique conformément à la revendication 5 ou 6, **caractérisé en ce qu'**une lèvre d'étanchéité circulaire (15), décalée radialement vers l'extérieur par rapport à la bague de butée (14), est formée sur le disque élastomère de la pièce annulaire de butée (13), lèvre qui, à l'état de fabrication, surplombe vers le bas la bague de butée (14), et, à l'état monté, par déformation, peut être posée de manière étanche sur le support de moteur (20) pour tous les états de compression et de détente.

8. Support de moteur élastique conformément à la revendication 7, **caractérisé en ce que** la lèvre d'étanchéité (15) présente une zone de bord sous forme de bourrelet circulaire (16) qui est indéformable par rapport à la zone adjacente.

9. Support de moteur élastique conformément à l'une des revendications 5 à 8, **caractérisé en ce qu'**il est formé sur le bord extérieur supérieur de la pièce annulaire de serrage (13), un bourrelet étanche circulaire plus petit (17) par rapport à la rondelle de pression (22).

10. Support de moteur élastique conformément à l'une des revendications 5 à 9, **caractérisé en ce que** qu'il est formé sur le disque élastomère de la pièce annulaire de serrage (13), dans la zone intérieure radiale au dessus de la zone partielle cylindrique (5) de la pièce annulaire de support (4), de préférence directement autour du tube support (3), une bague d'appui élastique (18) orientée vers le bas, qui, en fonction de la longueur utilisée du tube support en état de montage sous précontrainte, est posée vers le haut sur la zone partielle cylindrique (5) ou en est à distance.

11. Procédé de dimensionnement d'un support de moteur élastique conformément à l'une des revendications 1 à 10, **caractérisé en ce qu'**un dimensionnement de base pour la constante de ressort axiale et radiale d'un support de moteur (1) est effectué sous considération de la charge du moteur, de la configuration du support de moteur et du débattement par une adaptation des proportions et des facteurs d'angle sur les zones partielles structurelles de la pièce annulaire de support (5), de la pièce annulaire de serrage (13) et du tube support (3) ainsi que par le choix de la matière élastomère et
**en ce qu'**une adaptation précise et un ajustage des constantes de ressort sont effectués par rapport aux proportions concrètes du support de moteur, en particulier sur les points d'appui individuels d'un moteur, lors de l'utilisation d'une pièce annulaire de support (4) et d'une pièce annulaire de serrage (13) et via différents tubes supports (3) à partir d'un jeu de tubes supports mis à disposition avec différentes longueurs de tubes supports et / ou diamètres extérieurs de tubes supports.

12. Procédé de dimensionnement d'un support de moteur élastique conformément à La revendication 11, **caractérisé en ce que** l'angle de cône de la zone partielle conique (6) de la pièce annulaire de support (4) en état de fabrication se situe dans une plage de 25° - 30°.

13. Procédé de dimensionnement d'un support de moteur élastique conformément à la revendication 11 ou 12, **caractérisé en ce qu'**au moins deux supports de moteur (1) sont utilisés pour le logement d'un moteur à combustion interne, qui sont adaptés aux proportions respectives sur les points de support correspondants par insertion respective de différentes tubes supports (3) pour respectivement les mêmes pièces annulaires de support (4) et les mêmes pièces annulaires de serrage (13).
